# EUROPÄISCHE PATENTANMELDUNG

(11) **EP 4 748 568 A1**
(43) Veröffentlichungstag der Anmeldung: **27.05.2026**
(21) Anmeldenummer: 25218434.6
(22) Anmeldetag: 25.11.2025
(51) Int. Cl.: B32B 27/08, B32B 27/30, B32B 27/32

(54) **FOLIE ZUR BILDUNG EINES PLATTENMATERIALS UND PLATTENMATERIAL**

(30) Priorität: 26.11.2024 DE 102024134777
(71) Anmelder: Profol GmbH, 83128 Halfing (DE)
(72) Erfinder: PRASSBERGER, Maximilian, 83128 Halfing (DE)
(74) Vertreter: Hoffmann Eitle

(57) **Zusammenfassung**

Folie zur Bildung eines Plattenmaterials mit einer strukturierten Oberfläche durch Aufbringen der Folie auf ein Dekorsubstrat, wobei die Folie umfasst: eine Verschleißschutzgruppe, umfassend eine Verbindungsschicht, welche ausgeführt ist, mit einer Dekorschicht oder Dekorschichtgruppe verbunden zu werden, eine transparente Grundschicht auf der Verbindungsschicht, und eine Oberflächenschicht auf der transparenten Grundschicht; eine erste Lackschicht auf der Oberflächenschicht der Verschleißschutzgruppe, wobei die erste Lackschicht eine Beimischung von Feststoffpartikeln aufweist; sowie eine zweite Lackschicht auf der ersten Lackschicht, wobei die zweite Lackschicht eine Beimischung von Kieselsäurepartikeln aufweist.

## Beschreibung

### Technisches Gebiet

Die vorliegende Erfindung betrifft eine Folie zur Bildung eines Plattenmaterials durch Aufbringen der Folie auf ein Dekorsubstrat, insbesondere aus einem gegenüber der Folie steifen Material. Die Erfindung betrifft des Weiteren ein solches Plattenmaterial, insbesondere ein Fußbodenelement.

### Technologischer Hintergrund

Plattenmaterialen finden breite Anwendung als Bau-, Einrichtungs-, Dekor- und Konstruktionsmaterial. Dabei werden derartige Plattenmaterialien oft in Form sog. Laminate bereitgestellt, bei welchen eine Laminatschicht ein Substrat bedeckt. Die Laminatschicht stellt dabei die gewünschte Optik und die gewünschten Eigenschaften der Oberfläche bereit, wobei das Substrat die mechanische Stabilität bereitstellt. Damit können die Anforderungen an die Oberfläche von den mechanischen Anforderungen getrennt werden und es ergeben sich so vielerlei Vorteile hinsichtlich Effizienz, Kosten, Gewicht u. A.

Die Anforderungen an die Oberfläche von derartigem Plattenmaterial umfassen dabei nicht nur optische Anforderungen hinsichtlich eines zu erzielenden optischen und visuellen Eindrucks, sondern auch haptische Eigenschaften und insbesondere auch Abriebfestigkeit und Widerstandsfähigkeit. Die erstgenannten Eigenschaften sollen dabei nicht nur tastbar erfassbare Eigenschaften, sondern auch generell die Eigenschaften der Oberflächenstruktur umfassen. Die letztgenannten Eigenschaften betreffen insgesamt den Abrieb durch Verwendung des Plattenmaterials, so bspw. auch den Abrieb durch den Gebrauch des Plattenmaterials, insbesondere in Form oder als Teil eines Fußbodens.

Die vorgenannten Ziele können nicht immer alle zusammen in einem zufriedenstellenden Maße erreicht werden. Insbesondere die Bereitstellung von hochqualitativen Mustern bei zufriedenstellender Widerstandsfähigkeit und akzeptabler Herstellungskosten ist oft eine Herausforderung. Es ist daher Aufgabe der vorliegenden Erfindung, eine Folie zur Bildung eines Plattenmaterials durch Aufbringen der Folie auf ein Dekorsubstrat bereitzustellen, welche hochqualitatives Dekor mit hoher Abriebfestigkeit bei kosteneffizienter Herstellung vereint. Es ist ferner Aufgabe der vorliegenden Erfindung, ein entsprechendes Plattenmaterial, insbesondere in Form eines Fußbodenelements bereitzustellen.

### Zusammenfassung

Die genannten Aufgaben werden durch eine Folie zur Bildung eines Plattenmaterials durch Aufbringen der Folie auf ein Substrat gemäß dem Patentanspruch 1 und einem Plattenmaterial gemäß Patentanspruch 16 gelöst. Weitere vorteilhafte Ausgestaltungen der vorliegenden Erfindung sind in den abhängigen Patenansprüchen angegeben.

Demgemäß ist Folie vorgesehen zur Bildung eines Plattenmaterials mit einer strukturierten Oberfläche durch Aufbringen der Folie auf ein Dekorsubstrat, wobei die Folie eine Verschleißschutzgruppe, umfassend eine Verbindungsschicht, welche ausgeführt ist, mit einer Dekorschicht oder Dekorschichtgruppe verbunden zu werden, eine transparente Grundschicht auf der Verbindungsschicht, und eine Oberflächenschicht auf der transparenten Grundschicht, eine erste Lackschicht auf der Oberflächenschicht der Verschleißschutzgruppe, wobei die erste Lackschicht eine Beimischung von Feststoffpartikeln aufweist, sowie eine zweite Lackschicht auf der ersten Lackschicht, wobei die zweite Lackschicht eine Beimischung von Kieselsäurepartikeln aufweist, umfasst.

Des Weiteren ist ein Plattenmaterial vorgesehen, welches eine Folie nach einem der hier beschriebenen Ausführungsformen, sowie ein Substrat aus einem Material mit einer gegenüber der Folie größeren Steifigkeit umfasst.

### Kurze Beschreibung der Zeichnungen

Ausführungsformen der vorliegenden Erfindungen werden nun anhand der folgenden Figuren näher beschrieben. Die entsprechende Darstellung dient dabei lediglich des besseren Verständnisses der erfindungsgemäßen Lehre und der damit im Zusammenhang stehenden Vorteile, soll aber an keiner Stelle einschränkend verstanden werden. Es zeigen:
- Figuren 1A & 1B: schematisch den prinzipiellen Aufbau von Folien gemäß allgemeiner Ausführungsformen der vorliegenden Erfindung;
- Figur 2: schematisch eine Ko-Extrusion eines Teils der Folie gemäß einer Ausführungsform der vorliegenden Erfindung;
- Figuren 3A & 3B: schematisch die Bildung eines Plattenmaterials mit einer Folie gemäß einer Ausführungsform der vorliegenden Erfindung; und
- In Figur 4: ein Plattenmaterial in Form von Fußbodenelementen, welche aus einem Plattenmaterial nach einer der beschriebenen Ausführungsformen gefertigt wurden.

### Detaillierte Beschreibung

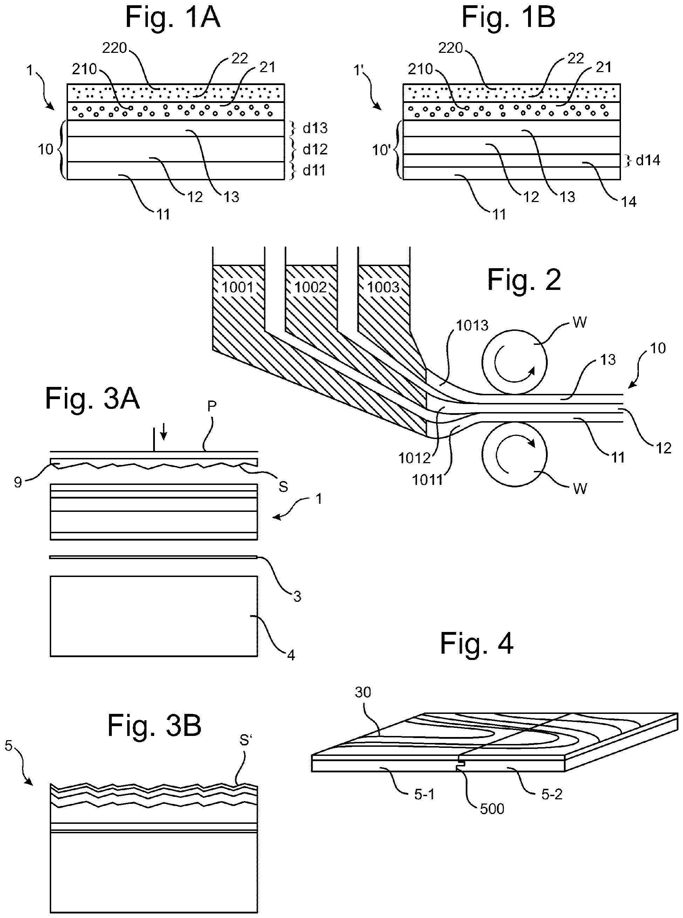

Figur 1A zeigt schematisch den prinzipiellen Aufbau einer Folie gemäß einer Ausführungsform der vorliegenden Erfindung. Demgemäß ist Folie 1 vorgesehen zur Bildung eines Plattenmaterials mit einer strukturierten Oberfläche. Die Folie 1 weist dabei eine Verschleißschutzgruppe 10 auf, welche eine Verbindungsschicht 11, eine transparente Grundschicht 12 auf der Verbindungsschicht 11 und eine Oberflächenschicht 13 auf der transparenten Grundschicht 12 auf. Die Oberflächenschicht 13 ist dabei vorzugsweise prägbar, d.h. umformbar, um einen wesentlichen Anteil an der geprägten Oberfläche des fertigen Produkts bereitzustellen. Die Verbindungsschicht 11 ist ausgeführt, mit einer Dekorschicht oder Dekorschichtgruppe wie nachstehend weiter ausgeführt verbunden zu werden. Insbesondere kann diese Verbindungsschicht 11 ein mit Maleinsäureanhydrid gepfropftes PP aufweisen, um eine gute Haftung zu Melaminharz(en) zu ermöglichen, welches dann in vorteilhafter Weise als Dekorträger eingesetzt werden kann.

Die Oberflächenschicht 13 stellt damit zur Lackseite insbesondere eine gute Prägbarkeit mit verschiedenen Strukturen wie bspw. Holz und Stein, eine gute Lackierbarkeit, und bereits einen wesentlichen Anteil an der Abriebfestigkeit bereit. Die als Rohstoffe zum Einsatz kommenden PP Block-Copolymere können hier für eine gute Haltbarkeit einer Corona-Vorbehandlung sorgen, damit für eine gute Lackierbarkeit, und letztendlich für ein vorteilhaftes Prägen der Oberfläche sorgen. Als thermoplastisches Elastomer kann das Prägen der Oberfläche deutlich verbessert werden, da der Rohstoff relativ weich verglichen mit den anderen Folien- und Plattenbestandteilen sein kann. Vorzugsweise kann die Oberflächenschicht 13 mit einem UV-Stabilisator versehen sein, um auch der im Innenbereich auftretenden UV-Belastung standzuhalten. Dies kann insbesondere ein Vergilbe oder Verspröden verhindern oder zumindest merklich herauszögern. Des Weiteren kann die Oberflächenschicht 13 mit einem Antiblock-Additiv versehen sein, um beim Aufwickeln während des Transports und/oder der Verarbeitung zu verblocken.

Die transparente Grundschicht 12 kann dabei insbesondere wieder eine gute Prägbarkeit mit verschiedenen Strukturen wie Holz und Stein zusammen mit der Oberflächenschicht 13 bereitstellen. Darüber hinaus kann die transparente Grundschicht 12 eine gute Transparenz sicherstellen, um damit eine gute Erscheinung des darunter liegenden Dekors zu leisten. Dies bedeutet, dass die transparente Grundschicht 12 insbesondere das Dekorbild optisch gut nach Außen trägt. Des Weiteren, kann die transparente Grundschicht 12 mit einer relativ hohen Zähigkeit dazu beitragen, dass die Folie 1 insgesamt dem Verpressungsprozess (vgl. Figuren 3A & 3B) standzuhält. Als Rohstoff können Random-, Block- und Homo-PP-Copolymere für die gute Prägebarkeit sowie die gute Transparenz und Zähigkeit zum Einsatz kommen. Des Weiteren kann ein Elastomer beigefügt werden, um die Prägbarkeit weiter zu erhöhen. Vorzugsweise kann die transparente Grundschicht 12 eine Kombination aus einem UV-Stabilisator und einem UV-Absorber aufweisen, um sowohl die Folie 1 an sich vor Vergilbung und Versprödung zu schützen, als auch mit dem UV-Absorber das Druckbild unter der Folie 1 vor UV-Strahlung. In Ausführungsformen, in welchem ein Schutz des Dekors nicht erwünscht oder nicht nötig ist, kann auch ein reiner UV-Stabilisator in der transparente Grundschicht 12 vorgesehen sein.

Vorzugsweise ist die Verschleißschutzgruppe 10 ein ko-extrudierter Folienaufbau, in welchem die Verbindungsschicht 11, die transparente Grundschicht 12 und die Oberflächenschicht 13 in einem Prozessschritt aus der jeweiligen Grundschmelze zusammengefügt werde. Dies bedeutet, dass die Verbindungsschicht 11 aus einem ersten Ausgangsgranulat 1001, die transparente Grundschicht 12 aus einem zweiten Ausgangsgranulat 1002 und die Oberflächenschicht 13 aus einem dritten Ausgangsgranulat 1003 durch jeweiliges Aufschmelzen und einem Zusammenfügen der Schmelzen in einer Walzenanordnung zusammengefügt werden (siehe auch Figur 2). Dabei kann die Verbindungsschicht 11 insbesondere als Haftvermittlerschicht mit einem mit Maleinsäureanhydrid gepfropften Polypropylen (PP) bestehen, was im späteren Herstellungs- und Veredelungsprozess eine besonders günstige Haftung zu einem Dekor-Element oder Schicht, z. B. in Form eines Melaminharzpapiers, ermöglicht.

Die jeweiligen Schichtdicken d11, d12, und d13 sind in vorteilhafter Weise dabei flexible wählbar und können somit der jeweiligen Anwendung angepasst werden. Generell, kann aber die Schichtdicke d12 der transparenten Grundschicht 12 größer sein als die Schichtdicke d11 der Verbindungsschicht 11 und als die Schichtdicke d13 der Oberflächenschicht 13. Dabei kann es von Vorteil sein, wenn d11 < 2 × d12 und d13 < 2 × d12 gilt. Beispielsweise können für die jeweiligen Schichtdicken die folgenden Bereiche angegeben werden, welche insbesondere in einer Anwendung für ein Fußbodenelement eine vorteilhafte Lösung bereitstellen: 1000µm < d11 1000µm, 1000µm < d12 1000µm und 1000µm < d13 1000µm.

Die Folie 1 weist ferner eine erste Lackschicht 21 auf der Oberflächenschicht 12 der Verschleißschutzgruppe 10 auf, wobei die erste Lackschicht 21 eine Beimischung von Feststoffpartikeln 210 aufweist. Des Weiteren weist die Folie 1 eine zweite Lackschicht 22 auf der ersten Lackschicht 21 auf, wobei die zweite Lackschicht 22 eine Beimischung von Kieselsäurepartikeln 220 aufweist. Die Lackschichten 21, 22, welche auf die Verschleißschutzgruppe 10 aufgebracht werden, können an sich jeweils auch in einem Mehrschichtaufbau bereitgestellt werden, sodass der erste Lack 21 und/oder der zweite Lack 21 in einer oder mehreren Schichten aufgebracht werden, dies je nach gewünschten Eigenschaften. Generell kann eine einzelne Lackschicht eine Flächendichte von mehr als 15 g / m² aufweisen. Die Feststoffpartikel können Korund aufweisen, und vorzugsweise einen mittleren Durchmesser in einem Bereich von 2 µm bis 20 µm, weiter vorzugsweise 3 µm bis 19 µm, innehaben. Die Kieselsäurepartikel können einen mittleren Durchmesser in einem Bereich von 2 µm bis 20 µm, weiter vorzugsweise 3 µm bis 19 µm, innehaben. Zur Erhöhung der Kratzbeständigkeit können neben und/oder anstatt Korund auch Bornitrid, Chromoxid, Glasperlen, und/oder Siliziumkarbid (SiC) zum Einsatz kommen.

Gemäß einer Ausführungsform wird der erste Lack 21 aufgetragen und mittels eines UV-Strahlers vorgehärtet/fixiert, dabei aber nicht völlig ausgehärtet, um die Haftung mit dem darauf aufgebrachten zweiten Lacks 22 zu verbessern. Dieser zweite Lack 22 wird dann auf den ersten Lack 21 aufgetragen. Danach kann der der Folienrohling zunächst durch eine an sich bekannte PAC-Station gefahren werden, wobei der zweite Lack 22 vorgeliert werden kann. Durch diese Vorgelierung kann die Faltungstiefe bei der anschließenden Aushärtung durch eine - ebenfalls an sich bekannte - Excimer-Station beeinflusst werden. Diese Behandlung mit der Excimerstation kann zu einer Faltung der Lackoberfläche führen, wobei eine matte optische Erscheinung sowie eine besonders gute Kratzfestigkeit in der Oberfläche erreicht werden kann. Letztere kann dabei insbesondere auch gegenüber einer Beimischung mit zusätzlichen Feststoffpartikeln, d.h. Partikeln aus einem anderen Feststoff als Kieselsäure 222, verbessert werden. Eine abschließende Aushärtung des Lackaufbaus 21, 22 kann durch eine Bestrahlung mit UV-Licht erfolgen.

Die Besonderheit des so gefertigten Aufbaus liegt insbesondere in einer verbesserten Beständigkeit gegen Kratzer und/oder Chemikalien und dabei eine matte Erscheinung aufzuweisen. Des Weiteren, lässt sich dieser Aufbau besonders gut strukturieren, dies nicht nur in einem Arbeitsschritt zusammen mit der Bildung des Plattenmaterials, sondern auch unter Erhaltung der matten Oberflächenerscheinung. Weitere Einzelheiten hierzu sind im Zusammenhang mit den Figuren 3A & 3B aufgeführt. Generell kann der erste Lack 21 ein 100%-System aus einem UV-härtenden Acrylat-Lack mit Feststoffpartikeln 210 aus bspw. Korund aufweisen. Die Partikelgrüße der Feststoffpartikel 210 kann größer sein als 10 µm. Der zweite Lack 22 kann ein 100%-System aus einem UV-härtenden Acrylat-Lack ohne Feststoffpartikel, wie etwa Korund, aber mit Kieselsäurepartikel 220 aufweisen. Die Partikelgröße der mit Kieselsäurepartikel 220 kann kleiner sein als 10 µm.

Generell können die Materialien der Folie 1 so ausgewählt sein, dass sie eine Weiterverarbeitung, insbesondere eine Verpressung mit einem Substrat zur Bildung eines Plattenmaterials, bei Temperaturen > 160°C standhält. Mögliche Rezepturen für die Ausgangsmaterialien fußen daher auf, d.h. enthalten u. A. zähe Block-PP-Copolymere sowie Homo-PP-Polymere und deren Abmischungen. Weiterhin können Random-PP-Polymere und/oder thermoplastische Elastomere zum Einsatz kommen. Solche Temperaturen können insbesondere dann erforderlich sein, wenn eine Aushärtung eines Dekorelements oder eine Dekorschicht des Plattenmaterials erfolgen soll. Die genannten Temperaturen erlauben daher in vorteilhafter Weise auch ein Aushärten einer Melaminharzbasierten Dekorschicht zur Bildung eines besonders hochwertigen Plattenmaterials. Ferner erlauben diese Eigenschaften eine Verarbeitung bei akzeptablen oder sogar gleichbleibenden Zykluszeiten.

Figur 1B zeigt schematisch den prinzipiellen Aufbau einer Folie gemäß einer Ausführungsform der vorliegenden Erfindung. Demgemäß ist Folie 1' vorgesehen, welche zunächst dieselben Elemente wie die Folie 1 aus Figur 1A aufweist. Das ebenda gesagte gilt entsprechend auch für die Folie 1', welche zusätzlich eine vierte Zusatzschicht 14 zwischen der Verbindungsschicht 11 und der transparenten Grundschicht 12 aufweist. Mit dieser Zusatzschicht kann die Prägbarkeit weiter verbessert werden und ggf. auch das Spektrum der möglichen Strukturen, wie bspw. Holz und Stein, bei weiterhin verbesserten Eigenschaften hinsichtlich Abrieb und Transparenz. Die Zusatzschicht 14 kann insbesondere durch eine entsprechend zusätzliche Schichtdicke d14 in einem Bereich von 5µm bis 50µm eine größere Prägetiefe während dem Verpressungsprozess abfangen, sodass das Endprodukt diesem Fertigungsprozess standhält und realistischere Strukturen bereitstellen kann. Als Rohstoffe können Random-, Block- und/oder Homo-PP-Copolymere für eine gute Prägebarkeit sowie gute Transparenz und Zähigkeit zum Einsatz kommen. Vorzugsweise ist die Zähigkeit/Härte der Zusatzschicht 14 gegenüber der transparenten Grundschicht 12 und/oder der Oberflächenschicht 13 erhöht, um auch eine relative große Prägetiefe schrittweise, d. h. Schicht für Schicht, abzufangen, ohne dass die Hafteigenschaften der die Verbindungsschicht 11 negativ beeinflusst werden.

Des Weiteren kann als Rohstoff auch ein Elastomer zum Einsatz kommen, um die Prägbarkeit weiter zu erhöhen. Ferner kann auch die Zusatzschicht 14 einen UV-Stabilisator, einen UV-Absorber oder eine Kombination daraus enthalten, um sowohl die Folie 1' an sich vor Vergilbung und Versprödung zu schützen als auch um das Druckbild unter der Folie 1' vor UV-Strahlung zu schützen (UV-Absorber).

Generell können die Folien 1, 1' oder eine oder mehrere Schichten der Schichten 11-14 ein Antistatikum-Additiv aufweisen, um in vorteilhafter Weise den Vereinzelungsprozess bzw. eine Zuführung in eine Verarbeitungsmaschine (z. B. Presse) zu vereinfachen. Neben einem permanenten Antistatikum kann auch ein migrierendes System oder ein Gleitmittel zum Einsatz kommen. In einer weiteren diesbezüglichen Ausführungsform, wird im Schichtaufbau bereits die Verbindungsschicht mit einer Struktur nach oben, d.h. in Richtung der darauffolgenden Schichten 12 bzw. 14, 13, usw., versehen, wobei sich diese Struktur auch vor der Prägung nach oben fortsetzt, sodass auch hier im Sinne einer verbesserten Vereinzelung und Verarbeitung der sog. Glasplatteneffekt wirksam verhindert werden kann. Weiterhin können die genannten Lackschichten und/oder Folienschichten durch geeignete Flammschutzmittel additiviert werden.

Figur 2 zeigt schematisch eine Ko-Extrusion eines Teils 10, 10' der Folie 1, 1' gemäß einer Ausführungsform der vorliegenden Erfindung. Demgemäß werden aus Rohstoffen 1001. 1002, 1003, d.h. Granulaten aus den erwähnten Materialien und Stoffkombinationen, die entsprechenden Schmelzen 1011, 1021, 1031 erzeugt und in einem Walzwerk W zur Folie 1 in einem Schritt verarbeitet. Das Ergebnis ist die Folie 10, 10' mit der Verbindungsschicht 11 aus der Schmelze 1011, der transparenten Grundschicht 12 aus der Schmelze 1012 und der Oberflächenschicht 13 aus der Schmelze 1013. Zur Herstellung eines vier- oder mehrschichtigen Aufbaus, werden an entsprechender Position die entsprechend zusätzlichen Schmelzen zugeführt, so bspw. eine Schmelze für eine Zusatzschicht 14 zwischen der Verbindungsschicht 11 und der transparenten Grundschicht 12.

Die Figuren 3A & 3B zeigen schematisch die Bildung eines Plattenmaterials mit einer Folie gemäß einer Ausführungsform der vorliegenden Erfindung. Demgemäß wird eine Folie 1 (oder 1'), eine Dekorschicht 3 bspw. in Form eines bedruckten und daher dekortragenden Melaminharzpapiers und ein Substrat 3 gestapelt. Auf diesen Stapel wird ein Prägewerkzeug 9 mit einer Struktur S gelegt und sodann mit einer Presse oder Kurztaktpresse P unter Einwirkung von Druck und ggf. Wärme verpresst. In dieser Weise kann ein Plattenmaterial 5 mit einer entsprechend strukturierten Oberfläche S' durch Aufbringen der Folie 1, 1' auf ein Dekorsubstrat 3, 4 gebildet werden, wie in Fig. 3B gezeigt. In einem Beispiel wird durch in der Presse P eine Folie 1 mit einem Pressblech 9 unter Einbringung einer Holz-, Stein- oder einer anderen Struktur umgeformt. Dabei behält das Endprodukt in besonders vorteilhafter Weise eine matte Erscheinung. Durch das nachträgliche Umformen der bereits ausgehärteten Lacke können weit bessere Ergebnisse in Sachen Kratzfestigkeit erzielt werden, im Vergleich zu einer geprägten Folie bei der dann der Lack auf die Struktur aufgebracht wird.

In Figur 4 ist ein Plattenmaterial in Form von Fußbodenelementen 5-1, 5-2 gezeigt, welche aus einem Plattenmaterial nach einer der beschriebenen Ausführungsformen gefertigt wurden. Als Fußbodenelement soll das Plattenmaterial 5-1, 5-2 einen entsprechenden optischen und haptischen Eindruck 30 vermitteln, welcher insbesondere durch die geprägte Folie 1, 1' bereitgestellt wird. Des Weiteren können die Fußbodenelemente 5-1, 5-2, Nut- bzw. Feder oder andere Befestigungselemente 500 aufweisen, um insbesondere einen ganzen Fußbodenbelag mit dem Plattenmaterial gemäß einer Ausführungsform der vorliegenden Erfindung bereitzustellen. Die Figur 4 zeigt somit eine Ausführung mit einer sog. Klickverbindung. Ein erfindungsgemäßes Plattenmaterial kann aber auch als flexible Rollenware zum Verkleben (ohne ein Klicksystem) ausgeführt sein.

Allgemein können die Ausführungsformen der vorliegenden Erfindung daher einen transparenten und glatten Wearlayer aus PP bereitstellen, wobei ein ko-extrudierter Drei- oder Vierschichtaufbau anschließend mit einem Lackauftragswerk, vorzugsweise innerhalb eines Maschinendurchlaufs, mit zwei oder mehreren Lackschichten veredelt wird. Anschließend kann das Halbzeug zur weiteren Verarbeitung geschnitten, gestapelt, umverpackt und transportiert werden, um mithilfe einer (Kurztakt-) Presse mit einer beschichteten Trägerplatte verpresst zu werden. Zwischen dieser Trägerplatte und der Folie kann sich ein bedrucktes Melaminharzpapier oder eine transparente Melaminharzzwischenlage befinden. In einem abschließenden Schritt können aus entsprechend größeren Platte einzelne Elemente, wie bspw. das in Figur 4 gezeigte Fußbodenelement, gefertigt werden. Die vorliegende Erfindung ermöglicht es insbesondere auch einen Fußboden mit einer PP/Kunststoff-Deckschicht (Designboden) in einer (Kurztakt-) Presse herzustellen, anstelle von den bisher eingesetzten Melaminharzoverlays (Laminatboden). Dabei kann weiterhin auf den gängigen Maschinenpark, insbesondere auf die verbreitet zum Einsatz kommenden Kurztaktpressen, zurückgegriffen werden. Die so erhaltenen Fußböden können viele der vorteilhaften Eigenschaften von Laminatböden erreichen und dem noch weitere Vorteile durch den Kunststsoffwearlayer bspw. in Form der Folie 1, 1', hinzufügen. Als weitere Vorteile sind ein warmes und weiches Fußgefühl und geringer Trittschall zu nennen. Weiterhin kann mit einer opaken Folie ein Möbelbauteil wie zum Beispiel ein Küchenkorpus entstehen. Eine solche opake Folie kann vor dem Lackieren auch noch mit einem Dekor bedruckt werden.

Die beschriebenen Ausführungsformen sollen im Allgemeinen nur dem verbesserten Verständnis der vorliegenden Erfindung diesen. Insbesondere soll diese Beschreibung aber nicht den Schutzumfang einschränken, welcher allein durch die unabhängigen Ansprüche bestimmt wird.

## Patentansprüche

1. Folie zur Bildung eines Plattenmaterials mit einer strukturierten Oberfläche durch Aufbringen der Folie auf ein Dekorsubstrat, wobei die Folie umfasst:
- eine Verschleißschutzgruppe, umfassend eine Verbindungsschicht, welche ausgeführt ist, mit einer Dekorschicht oder Dekorschichtgruppe verbunden zu werden, eine transparente Grundschicht auf der Verbindungsschicht, und eine Oberflächenschicht auf der transparenten Grundschicht;
- eine erste Lackschicht auf der Oberflächenschicht der Verschleißschutzgruppe, wobei die erste Lackschicht eine Beimischung von Feststoffpartikeln aufweist; sowie
- eine zweite Lackschicht auf der ersten Lackschicht, wobei die zweite Lackschicht eine Beimischung von Kieselsäurepartikeln aufweist.

2. Folie nach Anspruch 1, wobei die Feststoffpartikel Korund aufweisen, und vorzugsweise einen mittleren Durchmesser in einem Bereich von 2 µm bis 20 µm innehaben.

3. Folie nach Anspruch 1, wobei die Kieselsäurepartikel einen mittleren Durchmesser in einem Bereich von 2 µm bis 20 µm innehaben.

4. Folie nach einem der Ansprüche 1 bis 3, wobei die transparente Grundschicht der Verschleißschutzgruppe eine Prägung aufweist, deren Kanten vorzugsweise einen Beugungsradius von mindestens 10 µm aufweisen.

5. Folie nach einem der Ansprüche 1 bis 4, wobei die Verbindungsschicht der Dekorschichtgruppe zumindest teilweise, ein Block-Copolymer, Random Copolymer, Terpolymer oder Elastomer umfasst.

6. Folie nach einem der Ansprüche 1 bis 5, wobei die Dekorgrundschicht der Dekorschichtgruppe zumindest teilweise einen Polyolefin-basierten Kunststoff, vorzugsweise Polypropylen, aufweist.

7. Folie nach Anspruch 6, wobei die Dekorgrundschicht eine farbgebende Komponente aufweist.

8. Folie nach einem der Ansprüche 1 bis 7, wobei die Dekorträgerschicht der Dekorschichtgruppe zumindest teilweise, vorzugsweise vollständig, ein Block-Copolymer und/oder PP-Homopolymer umfasst.

9. Folie nach einem der Ansprüche 1 bis 8, wobei die Dekorschicht einen Farbstoff in einem Casein-, Polyurethan- oder Acryl-basierten Bindemittel umfasst und die Dekorschicht als wasser- und/oder organische Lösungsmittelbasiertes Farbsystem in gängigen Druckverfahren wie Tiefdruck oder Digitaldruck aufgebracht wird.

10. Folie nach einem der Ansprüche 1 bis 9, wobei die weitere Verbindungsschicht der Verschleißschutzgruppe ein thermoplastisches Elastomer, einen Polyolefin-basierten Kunststoff, Polypropylen und/oder Polyethylen aufweist.

11. Folie nach Anspruch 10, wobei die weitere Verbindungsschicht einen Haftvermittler, vorzugsweise Maleinsäureanhydrid gepfroptes Polypropylen, aufweist.

12. Folie nach einem der Ansprüche 1 bis 9, wobei die transparente Grundschicht der Verschleißschutzgruppe zumindest teilweise, vorzugsweise vollständig, einen Random Copolymer aufweist.

13. Folie nach einem der Ansprüche 1 bis 12, wobei die Grundschicht der Verschleißschutzgruppe weich gegenüber der Oberflächenschicht ist und vorzugsweise einen Elastomer aufweist.

14. Plattenmaterial, aufweisend eine Folie nach einem der Ansprüche 1 bis 13 sowie ein Substrat aus einem Material mit einer gegenüber der Folie größeren Steifigkeit.
